# FASCICULE DE BREVET EUROPEEN

(11) **EP 2 512 831 B1**
(45) Date de publication et mention de la délivrance du brevet: **23.10.2013**
(21) Numéro de dépôt: 10798057.5
(22) Date de dépôt: 16.12.2010
(51) Int. Cl.: B60C 11/13

(54) **PNEU A FAIBLE RESISTANCE AU ROULEMENT**
REIFEN MIT GERINGER ROLLREIBUNG
TIRE HAVING LOW ROLLING FRICTION

(30) Priorité: 17.12.2009 FR 0959095
(43) Date de publication de la demande: 24.10.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: FLAMENT, Julien, F-63000 Clermont-Ferrand (FR); LE-HEN, François, F-63100 Clermont-Ferrand (FR)
(74) Mandataire: Diernaz, Christian
(86) Numéro de dépôt international: PCT/EP2010/069880
(87) Numéro de publication internationale: WO 2011/073313

(56) Documents cités:
- EP-A1- 0 787 601
- JP-A- 4 345 504
- JP-A- 2003 159 910

## Description

La présente invention est relative aux bandes de roulement d'enveloppes de pneus destinés à équiper des véhicules automobiles de tourisme.

Le problème de la réduction de la consommation d'énergie pour le déplacement d'un véhicule est un problème important et devient essentiel de nos jours. Bien souvent, ce problème conditionne le développement et la commercialisation de certains pneumatiques. La prise en compte de ce problème par les personnes du métier implique l'obtention de pneus ayant une résistance au roulement réduite. Par résistance au roulement d'un pneu, on entend la quantité d'énergie consommée par le pneu pour le mettre en mouvement, cette quantité d'énergie étant non restituée par ledit pneu.

On sait que la résistance au roulement d'un pneu en roulage est reliée aux pertes énergétiques dans ledit pneu lesquelles sont, pour une partie, dépendantes des caractéristiques d'hystérèse des mélanges de gomme employés et tout particulièrement de ceux composant la bande de roulement et, pour une autre partie, dépendantes des cycles de déformations subies par lesdits mélanges pendant le roulage du pneumatique.

Si on considère ce qui se passe pendant le roulage d'un pneu comportant une bande de roulement, on constate que, dans la zone de contact, la bande de roulement est soumise à la fois à l'action des forces de pression perpendiculaires à la surface de contact avec le sol, ces forces équilibrant la charge portée par le pneu, à l'action de forces de cisaillement tangentes à la surface de contact et orientées à la fois longitudinalement et transversalement, et à des efforts internes de compression résultant de la variation de courbure de ladite bande de roulement. Les forces tangentielles sont la conséquence directe du contact entre le sol et la surface de roulement de la bande de roulement du pneu et de l'existence d'un frottement entre lesdites surfaces. Sous l'effet des efforts de compression, résultant de la flexion de la bande de roulement, et compte tenu de l'existence des forces tangentes à la surface de roulement, il se produit une déformation de la bande de roulement dans le sens de l'épaisseur équivalente à un épaississement de ladite bande. Cette déformation, dans le sens de l'épaisseur de la bande de roulement est, en partie seulement, limitée par les forces de contact agissant perpendiculairement à la surface de roulement dans la zone de contact et les forces de pression de gonflage s'exerçant à l'intérieur du pneu.

Une possibilité de réduction des pertes énergétiques d'un pneumatique en roulage concerne la réduction des pertes énergétiques résultant des caractéristiques d'hystérèse des mélanges de gomme employés et tout particulièrement des mélanges composant la bande de roulement.

Une autre possibilité de réduction des pertes énergétiques concerne la manière dont la bande de roulement est pourvue de découpures, ces découpures étant réalisées sous forme d'entailles et/ou d'incisions, pour former un dessin de sculpture. Par incision, on entend une découpure délimitée par des parois en vis-à-vis distantes d'une faible distance permettant leur mise en contact l'une contre l'autre lors du roulage. Par rainure, on entend une découpure dont les parois en vis-à-vis ne peuvent venir en contact l'une contre l'autre dans les conditions normales de roulage ; une rainure a une épaisseur au moins égale à 2 mm.

Il est connu du brevet EP0787601-B1 qu'il est possible d'atteindre cet objectif en réalisant une bande de roulement pour pneu ayant une pluralité d'incisions d'orientation transversale dont le nombre et la largeur sont déterminées de façon précise en fonction des dimensions géométriques du pneu, notamment de ses courbures circonférentielle et méridienne (cette dernière étant obtenue dans un plan contenant l'axe de rotation du pneu pourvu de ladite bande).

Cet enseignement est pleinement satisfaisant sur le plan de la réduction des pertes hystérétiques des matériaux de la bande de roulement lors du roulage du pneu. Toutefois, il apparaît que la bande de roulement du pneu ainsi constituée a des performances réduites notamment lors du roulage sur des chaussées revêtues d'eau par temps de pluie notamment.

Un autre pneu est connu du document JP-A-2003 159910.

L'objet de l'invention est d'obtenir une nouvelle bande de roulement qui combine à la fois une amélioration sensible de la performance en résistance au roulement sans conduire à une dégradation des performances en roulage sur tout type de sol et notamment un sol revêtu d'un film d'eau.

Le pneu selon l'invention est renforcé par une armature de carcasse et par une ceinture de renforcement radialement à l'extérieur de l'armature de carcasse. Ce pneu comprend une bande de roulement ayant une surface de roulement destinée à venir en contact avec un sol pendant le roulage du pneu, cette bande de roulement comprenant des rainures d'orientation circonférentielle, ces rainures d'orientation circonférentielle délimitant des rangées d'éléments de sculpture comprenant deux rangées de bord délimitant axialement ladite bande. Ces rangées de bord sont pourvues d'une pluralité de rainures transversales pour permettre l'écoulement de l'eau vers l'extérieur de la bande de roulement, chaque rainure transversale, de largeur au moins égale à 2 mm, ayant une profondeur et étant délimitée par des parois se faisant face.

En outre, une pluralité des rainures transversales d'une rangée de bord comprend au moins un plot d'appui faisant saillie sur au moins une paroi délimitant la rainure considérée, chaque plot d'appui comprenant une surface active, c'est-à-dire une surface apte à venir en contact avec une autre surface pendant le passage dans le contact avec le sol, cette surface active étant à une longueur circonférentielle d'ouverture Ha de ladite autre surface, cette longueur circonférentielle d'ouverture Ha étant mesurée sur le pneu gonflé à sa pression d'usage. Cette bande peut en outre, mais ce n'est pas nécessaire pour l'invention, comprendre une pluralité d'incisions transversales de largeur Hi formées sur au moins une rangée de bord.

Cette bande est telle que

- la somme des aires des surfaces actives d'une rainure transversale est au moins égale à 10% et au plus égale à 50% de l'aire de la surface de paroi sur laquelle sont formées ces surfaces actives,

- la longueur maximale dans la direction transversale d'une surface virtuelle convexe entourant l'ensemble des surfaces actives d'une rainure transversale et de plus petite longueur de contour est au moins deux fois plus grande que la hauteur maximale de cette même surface virtuelle convexe prise dans la direction de la profondeur de la rainure transversale,

- il existe au moins un passage pour un fluide entre chaque plot d'appui d'une rainure et le fond de ladite rainure, ce passage ayant au moins une hauteur radiale égale à 10% de la profondeur de la rainure,

- chaque rangée de bord a un taux de creux surfacique moyen Tc, ce taux de creux étant calculé en faisant le rapport entre la somme des longueurs circonférentielles d'ouverture Ha de toutes les surfaces actives des plots d'appui de la rangée de bord considérée, cela pour toutes les rainures comportant au moins un plot d'appui, et des longueurs circonférentielles Hi des incisions transversales, cette somme étant divisée par la longueur circonférentielle totale de la bande bord diminuée des longueurs circonférentielles des rainures dépourvues de plots, ce taux de creux surfacique moyen Tc pour chaque rangée de bord est au moins égal à 0.7 et au plus égal à 1.6 fois le ratio E/R. E est une moyenne arithmétique calculée pour toutes les rainures comportant des plots d'appui de l'épaisseur mesurée entre un point de la surface active radialement le plus à l'extérieur et un point radialement le plus à l'extérieur de la ceinture de renforcement. R est une moyenne arithmétique calculée pour toutes les rainures comportant des plots d'appui de la distance mesurée entre le point de la surface active de chaque plot d'appui radialement le plus à l'extérieur et l'axe de rotation du pneu pourvu de la bande de roulement.

Dans le cas où la bande ne comprend pas d'incisions transversales sur les rangées de bord, on ne prend en compte dans le calcul du taux de creux surfacique moyen Tc que les rainures transversales comprenant au moins un plot d'appui.

En partant de la valeur déterminée pour le taux de creux surfacique dans la direction circonférentielle, il est possible d'ajuster au mieux les déformations élastiques des rangées de bord au passage dans le contact avec la chaussée de manière à ce que ces déformations soient appropriées pour réduire les pertes hystérétiques des matériaux composant la bande de roulement.

En effet, si l'on examine la bande de roulement d'un pneumatique gonflé à une pression correspondant à sa pression d'utilisation et supportant une charge donnée, on constate que ladite bande présente une surface, dite surface de roulement, située radialement à l'extérieur du pneumatique, qui, en dehors de la zone de contact avec le sol, peut être caractérisée comme une surface à double rayon de courbure, à la fois dans le sens méridien et dans le sens circonférentiel. Cette surface est caractérisée par le fait que son intersection avec un plan radial, c'est à dire un plan qui contient l'axe de rotation du pneumatique, a un profil qui présente en tout point un rayon de courbure méridien non nul; de même et de manière évidente, les intersections de la surface de roulement avec des plans perpendiculaires à l'axe de rotation du pneumatique correspondent à des cercles dont les rayons de courbure sont quasiment identiques au rayon du pneumatique gonflé non chargé et mesuré dans le plan équatorial.

Il faut noter que les parties de bord d'un bande de roulement d'un pneu sont des parties à plus fortes courbures méridienne et circonférentielle comparativement à la partie de la bande située entre les deux parties de bord. Ainsi, il est surprenant qu'en formant des rainures transversales sur les bords pour bénéficier d'un avantage en roulage par temps de pluie, il ait été possible d'abaisser de façon significative les pertes hystérétiques en roulage en formant dans ces rainures de bord des plots d'appui de surface limitée selon l'invention.

Définitions

Le plan équatorial est le plan perpendiculaire à l'axe de rotation du pneumatique et passant par le milieu de la largeur axiale de la bande de roulement.

Par rainure, on entend toute découpure réalisée dans la bande de roulement et délimitée par deux parois en vis-à-vis débouchant à la surface de roulement, cette rainure ayant une largeur, c'est à dire que la distance moyenne séparant les parois de la rainure entre l'ouverture et le fond de la rainure, qui est en moyenne d'au moins 2 mm. Dans les conditions normales d'usage d'un pneu, les parois délimitant une rainure ne sont jamais en contact entre elles.

Par incision, on entend une découpure de largeur inférieure à 2 mm et qui présente la particularité que les parois en vis-à-vis délimitant ladite incision peuvent venir en contact au moins partiel l'une contre l'autre. En pratique, une incision a une largeur inférieure à 1 mm et encore plus préférentiellement inférieure à 0.7 mm.

L'aire d'une paroi délimitant une rainure transversale d'une rangée de bord est prise entre l'extrémité de la rainure débouchant dans une rainure circonférentielle et l'extrémité axialement la plus à l'extérieur cette rainure correspondant à la largeur axiale maximale de contact de la bande de roulement avec la chaussée dans des conditions nominales d'usage du pneu.

En règle générale, si le taux de creux surfacique moyen Tc dans la direction circonférentielle est inférieur à 0,7 fois la valeur de l'expression E/R, cela signifie que la variation de longueur circonférentielle de la surface de roulement sur la rangée de bord considérée, résultant du passage dans la zone de contact, est supérieure à ce que peut absorber la seule fermeture des incisions transversales, et il se produit alors une compression dans le sens circonférentiel qui provoque un épaississement de la bande de roulement conduisant à une perte d'énergie par hystérèse.

Quand le taux de creux surfacique moyen Tc dans la direction circonférentielle est supérieur à 1,6 fois la valeur de l'expression E/R, les incisions ne se ferment pas complètement dans la zone du contact et en conséquence il n'est pas possible d'empêcher l'écrasement de la bande de roulement sous l'action des forces perpendiculaires à la surface de roulement, ce qui conduit à une diminution de l'épaisseur de ladite bande et donc à une perte d'énergie liée à l'hystérèse des matériaux caoutchoutiques.

Encore plus préférentiellement, le taux de creux surfacique moyen Tc dans la direction circonférentielle est au moins égal à 0,8 et au plus égal à 1,5.

Outre la réduction des pertes hystérétiques des matériaux par déformation, il est avantageux d'améliorer encore l'écoulement de l'eau dans la rainure vers l'extérieur de la bande de roulement. Pour cela, il est avantageux qu'au moins un plot d'appui soit formé axialement vers l'intérieur de chaque rainure transversale de la rangée de bord pour former un plot de fermeture. Ce plot de fermeture comporte un profil externe favorisant l'écoulement de liquide axialement vers l'extérieur en combinaison avec au moins un autre plot d'appui. Avantageusement, ce plot de fermeture comprend un profil de forme courbe et convexe, ce profil convexe s'étendant entre la partie radialement le plus à l'extérieur et le fond de la rainure, son centre de courbure étant situé axialement vers l'extérieur dudit plot de fermeture. Bien entendu, ce plot de fermeture participe à la maîtrise des déformations résultant de la mise à plat du pneu dans le contact afin de limiter les pertes hystérétiques en roulage.

De manière pratique, chaque plot d'appui peut être formé sur une seule paroi délimitant une rainure transversale.

Dans une variante, chaque plot d'appui peut être constitué de deux demi plots d'appui se faisant face par leurs surfaces d'appui respectives.

De façon avantageuse pour rigidifier la bande de roulement, la surface active d'une pluralité de plots d'appui a une géométrie comprenant des creux et des reliefs, ces creux et reliefs interagissant entre eux pour assurer un blocage au moins partiel et au moins selon une direction des mouvements relatifs d'une paroi de la rainure par rapport à la paroi de la rainure en vis-à-vis.

Il a été en outre constaté que tout en conservant des performances satisfaisantes en perte d'énergie par déformation de matériau de la bande de roulement, il était possible d'améliorer encore l'écoulement dans les rainures transversales et dans les rainures circonférentielles dans lesquelles débouchent ces rainures transversales. Pour ce faire, selon l'invention, au moins une rainure transversale comprend un plot de fermeture d'extrémité porté par au moins une paroi de la rainure transversale sur une hauteur, mesurée à partir du fond de la rainure, au moins égale à 80% de la profondeur moyenne de la rainure, ce plot de fermeture étant formé au voisinage de la rainure longitudinale dans laquelle débouche la rainure transversale de manière à fermer au moins en partie la rainure transversale et aider l'écoulement dans la rainure transversale et dans la rainure circonférentielle.

Avantageusement, ce plot de fermeture est formé comme un plot d'appui de la rainure transversale en lui attribuant une surface d'appui pouvant être en contact avec une surface en vis-à-vis lors du passage dans le contact. Si tel est le cas, la surface d'appui du plot de fermeture doit être intégrée à la surface totale d'appui de la rainure et dans ce cas, l'aire de la surface d'appui du plot de fermeture est au moins égale à 5% et au plus égale à 30% de l'aire de la surface de paroi sur laquelle est formé ce plot de fermeture.

Pour la rainure transversale considérée comprenant à la fois un plot de fermeture et au moins un autre plot d'appui, on conserve au total une surface totale d'appui de 10% à 50% de l'aire de la surface de paroi.

Pour améliorer l'écoulement de l'eau dans la rainure transversale, il est avantageux que, le plot de fermeture ayant une surface axialement interne et une surface axialement externe, la surface axialement interne faisant face à la rainure circonférentielle ou longitudinale et la surface axialement externe orientée axialement vers l'extérieur de la bande, la surface externe du plot de fermeture a, vue en coupe radiale, une forme curviligne. Cette forme peut notamment être concave de type « toboggan ».

Pour éviter une trop forte interaction entre le plot de fermeture et les plots d'appui d'une même rainure, il est judicieux que la distance minimale b entre le plot de fermeture et chacun des autres plots d'appui de la rainure transversale soit au moins égale à 10% de la profondeur de la rainure transversale.

L'invention est illustrée par des dessins qui montrent des exemples de réalisation qui ne sont en rien limitatifs et sur lesquels :

- la figure 1 montre une vue en plan partielle d'une bande de roulement comprenant un plot d'appui dans chaque rainure transversale ;

- la figure 2 montre une coupe méridienne selon une ligne II-II prise sur la figure 1 ;

- la figure 3 montre une variante de bande de roulement selon l'invention comprenant une pluralité de plots d'appui dans chaque rainure transversale ;

- la figure 4 montre en plan une variante de bande de roulement selon l'invention, les plots d'appui étant disposés selon des positions transversales différentes ;

- la figure 5 en vue de dessus une variante de plot d'appui formé de deux demi plots ;

- la figure 6 montre en vue de dessus une variante de plot d'appui formé de deux demi plots ;

- la figure 7 montre une vue en plan locale d'une rainure transversale comprenant outre un plot d'appui, un plot de fermeture de la rainure pour optimiser l'écoulement d'eau sous le plot d'appui.

- la figure 8 montre une vue en coupe selon la ligne VIII-VIII sur la figure 7.

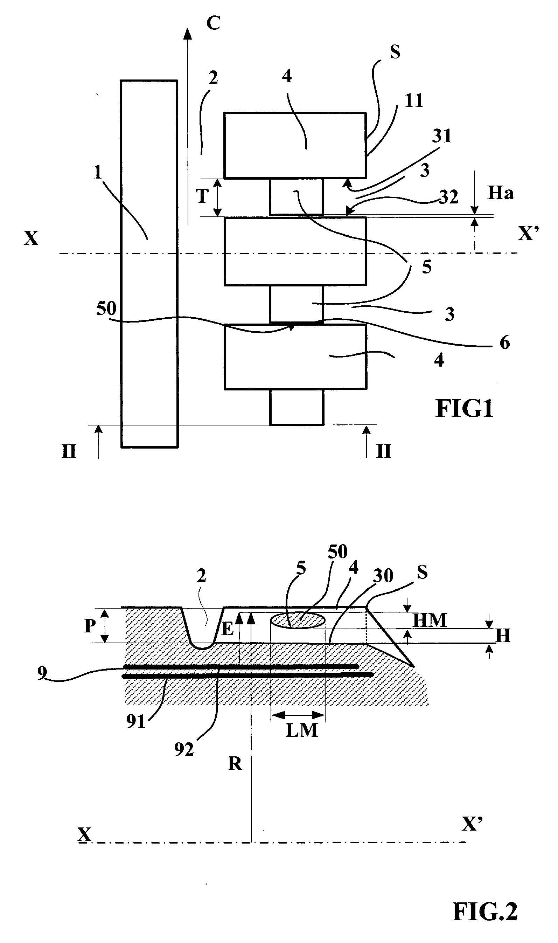

La figure 1 montre une vue en plan partielle d'une bande de roulement 1 selon l'invention ; la vue montre un bord 11 de cette bande de roulement délimité par une rainure circonférentielle 2. Ce bord 11 est pourvu avec une pluralité de rainures transversales 3 débouchant à la fois dans la rainure circonférentielle 2 et vers l'extérieur de la bande. Chaque rainure transversale 3 est délimitée par des parois en vis-à-vis 31, 32, une desdites parois comprenant en saillie un plot d'appui 5. Ces rainures transversales délimitent une pluralité de blocs 4. Chaque rainure transversale a une largeur T qui est supérieure à 2 mm.

Chaque plot d'appui 5 d'une rainure transversale 3 comporte une surface active 50 (visible sur la figure 2) apte à venir en contact avec la paroi 32 de la rainure en vis-à-vis pendant le passage dans le contact avec le sol. La surface active de chaque plot est séparée par une fente 6 mince de largeur Ha, cette largeur Ha étant mesurée sur le pneu gonflé à sa pression d'usage et hors de la zone de contact avec la chaussée.

Comme on peut le voir sur la figure 2 montrant une coupe selon la ligne II-II sur la figure 1, ce pneu comprend une armature de sommet 9 formée par deux nappes de renforcement 91, 92. Par ailleurs, chaque plot 5 d'une même rainure a une longueur transversale maximale LM égale à au moins deux fois la hauteur maximale HM de ce plot prise dans la direction de la profondeur P de la rainure transversale.

En outre, l'aire de la surface active 50 de chaque plot, ici égale à l'aire de la section de chaque plot vu en coupe, est au moins égale à 10% et au plus égale à 50% de l'aire de la surface de paroi sur laquelle est formée le plot d'appui 5. Cette surface de paroi s'étend entre la rainure circonférentielle 2, le fond 30 de la rainure transversale 3 et un segment S, représenté en traits pointillés sur la figure 2, perpendiculaire à l'axe de rotation et passant par le point axialement le plus à l'extérieur du bloc 4 venant en contact avec la chaussée dans les conditions nominales d'usage du pneu.

En outre, il existe un passage pour l'eau entre le plot d'appui 5 et le fond 30 de la rainure transversale 3, ce passage ayant une hauteur H au moins égale à 10% de la profondeur P de la rainure.

Dans le cas du plot d'appui 5 montré, les points radialement les plus à l'extérieur sont à une distance R de l'axe de rotation repéré sur cette figure 2 par l'axe XX', ces mêmes points sont à une distance E de la nappe 92 radialement la plus à l'extérieur de l'armature de sommet 9.

L'aire d'une surface active est évaluée en projection selon la direction circonférentielle sur le plan méridien moyen, c'est-à-dire un plan passant par l'axe de rotation du pneu et par la position circonférentielle moyenne de la surface active. De même, l'aire de la surface de paroi sur laquelle est formée au moins une surface active est évaluée en projection selon la direction circonférentielle sur le plan méridien moyen de la rainure considérée.

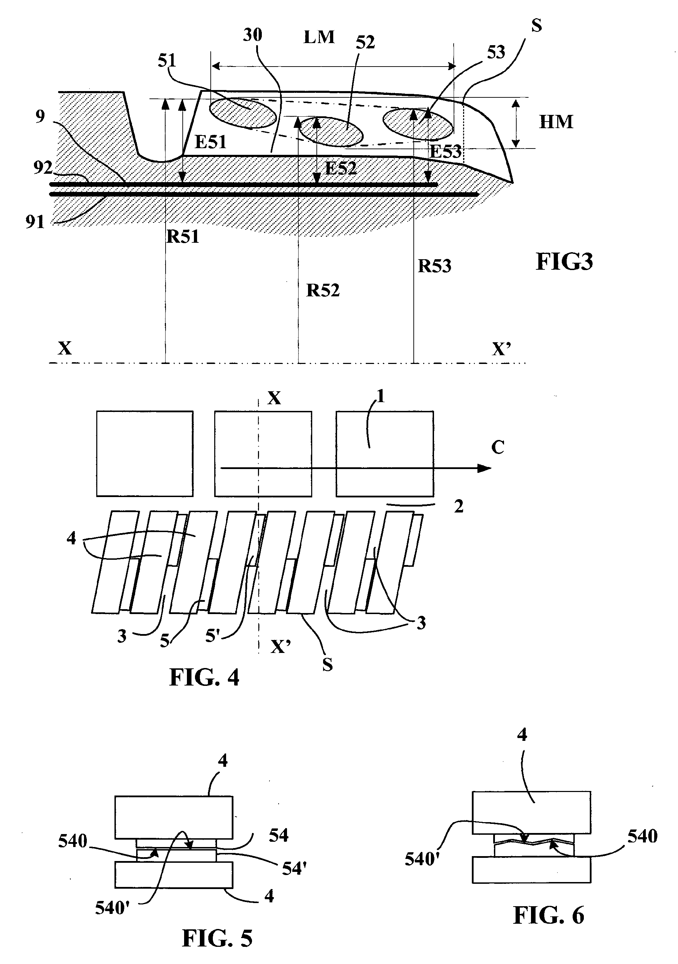

La figure 3 montre une variante de bande de roulement selon l'invention comprenant une pluralité de plots d'appui dans chaque rainure transversale. Sur cette figure 3 on voit qu'une rainure transversale comprend trois plots d'appui 51, 52, 53 espacés les uns des autres dans la direction transversale (c'est-à-dire dans une direction parallèle à l'axe de rotation du pneu). Chacun de ces trois plots d'appui a une section sensiblement ovale dont le grand axe est incliné par rapport à une direction parallèle à l'axe de rotation. Autour de ces trois plots on définit un contour virtuel de plus courte longueur enveloppant lesdits trois plots. On définit la longueur transversale maximale équivalente pour ces trois plots la longueur LM maximale dans la direction transversale de ce contour enveloppant. De même, on définit une hauteur maximale HM de ce contour enveloppant comme la distance radiale séparant les deux points de ce contour radialement les plus éloignés l'un de l'autre. Dans ce cas, pour satisfaire les conditions de l'invention cette variante doit être telle que la longueur LM est au moins égale à deux fois la hauteur HM. Grâce à cette condition on répartit dans la direction transversale la pluralité de plots d'appui. Bien entendu, il doit exister un passage entre chacun des plots d'appui et le fond 30 de la rainure pour permettre le passage de l'eau lors d'un roulage par temps de pluie. Lorsque une rainure comprend un plot d'appui unique, le contour virtuel enveloppant ledit plot correspond à son propre contour.

Cette figure 3 permet d'expliquer la manière dont sont calculées les limites numériques du taux de creux surfacique moyen Tc pour chaque rangée de bord dans le cas où sont présent plusieurs plots d'appui. En effet, ce taux de creux surfacique moyen doit être au moins égal à 0.7 et au plus égal à 1.6 fois le rapport E/R et encore plus préférentiellement au moins égal à 0.8 et au plus égal à 1.5 fois le rapport E/R.

La valeur de E est obtenue comme étant la moyenne calculée pour toutes les rainures comportant des surfaces actives de l'épaisseur mesurée entre un point de la surface active radialement le plus à l'extérieur et un point radialement le plus à l'extérieur de la ceinture de renforcement. Dans le cas de la présente rainure, l'épaisseur à prendre en compte correspond à l'épaisseur E51 du plot d'appui radialement le plus à l'extérieur correspond au plot 51 axialement le plus à l'intérieur pour lequel cette épaisseur E51 est plus grande que les épaisseurs E52 et E53 des plots d'appui 52 et 53 axialement à l'extérieur.

La valeur de R est obtenue comme la moyenne, calculée pour toutes les rainures comportant des surfaces actives, de la distance mesurée entre le point de la surface active radialement le plus à l'extérieur et l'axe de rotation (représentée par la direction XX' sur la figure 3) du pneu pourvu de la bande de roulement. Dans le cas de la présente rainure, le plot d'appui radialement le plus à l'extérieur correspond au plot 51 axialement le plus à l'intérieur pour lequel la distance R51 est plus grande que les distances R52 et R53 des plots d'appui 52 et 53 axialement à l'extérieur.

La figure 4 montre en plan une variante de bande de roulement 1 selon l'invention, cette bande comprenant des parties de bord formant les limites axiales de la bande. La partie de bord limitée axialement à l'extérieur par la limite S et représentée sur la figure 4 comprend une pluralité de rainures d'orientation transversale 3 délimitant avec une rainure circonférentielle 2 des blocs 4. Par rainure d'orientation transversale on entend ici des rainures formant un angle différent de zéro degré avec une direction parallèle à l'axe de rotation du pneu (ici représenté par un axe XX'). Chaque bloc 4 comprend sur une de ses faces latérales un plot d'appui 5, 5'. On note que d'un bloc au bloc suivant dans la direction circonférentielle (repérée par une flèche C sur la figure), les plots d'appui 5, 5' sont disposés de manière à occuper deux positions transversales différentes dans les rainures.

Dans pareille configuration, si chaque plot d'appui 5, 5' comprend une surface active distante d'une distance Ha du bloc voisin avec lequel cette surface peut venir en contact pendant le roulage, la valeur du taux de creux surfacique moyen Tc est obtenue en faisant le rapport entre :

- la somme des longueurs circonférentielles d'ouverture Ha de toutes les surfaces actives des plots d'appui de la rangée de bord considérée quelle que soit la position transversale desdits plots d'appui et cela pour toutes les rainures comportant au moins un plot d'appui,

- et la longueur circonférentielle moyenne totale de la bande bord.

Bien entendu, dès que des incisions transversales de largeur moyenne Hi sont également présentes sur les bords de la bande de roulement, il est nécessaire de les intégrer dans ce calcul du taux de creux surfacique moyen puisque ces largeurs Hi sont appropriées pour que ces incisions se ferment dans le contact en roulage.

La figure 5 montre une vue partielle d'une surface de bande de roulement ; cette vue montre deux blocs 4 portant chacun un demi plot d'appui 54, 54', ces deux demi plots étant prévus pour venir en contact l'un contre l'autre sur leurs surfaces d'appui 540, 540' respectivement, lors du roulage du pneu pourvu de cette bande de roulement.

Avantageusement, la surface d'appui correspondant dans ce cas à la surface de contact d'un demi plot avec l'autre demi plot peut être non plane afin de limiter les mouvements relatifs d'un demi plot par rapport à l'autre demi plot. La figure 6 montre une telle réalisation selon laquelle chaque surface d'appui 540, 540' de chaque demi plot comprend des zigzags aptes à coopérer avec des zigzags sur l'autre surface d'appui afin de limiter les mouvements relatifs.

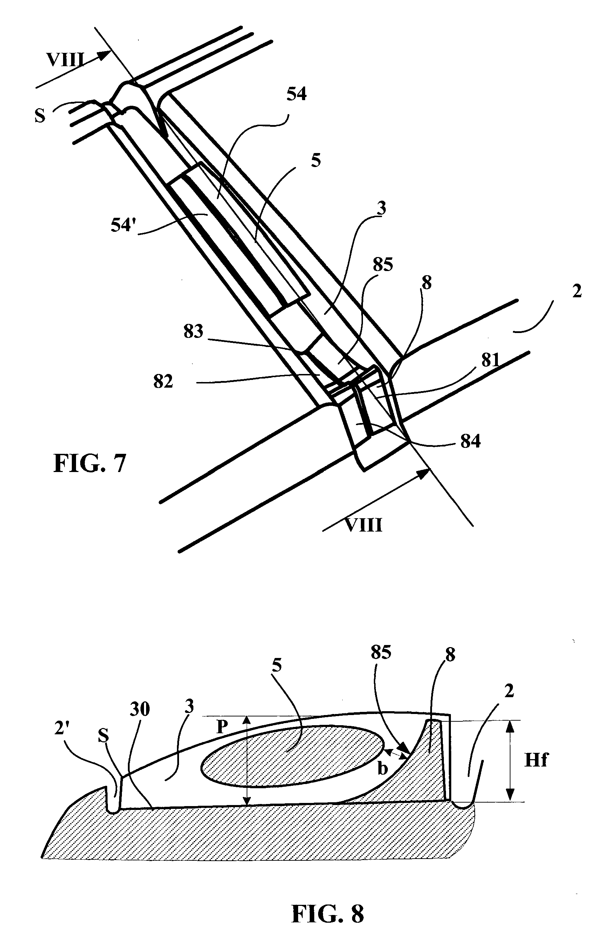

La figure 7 montre une vue en perspective d'une partie de bord d'une bande de roulement selon l'invention. On montre ici une rainure transversale 3 dont l'une des extrémités débouche à l'extérieur de la bande (repéré par la lettre S) et dont l'autre extrémité axialement proche d'une rainure circonférentielle 2 est fermée par un dispositif de fermeture 8. Cette rainure comprend un autre plot d'appui 5 formé de deux demi plots d'appui 54, 54' semblables à ceux montrés avec la figure 5.

Le dispositif de fermeture 8 est constitué de deux parties 81, 82 séparées par une incision 83 apte à se refermer lors du passage dans le contact. Par ailleurs, ce dispositif de fermeture 8 comprend une face latérale interne 84 faisant face à la rainure circonférentielle 2 pour fermer sensiblement la rainure transversale 3 et une face latérale externe 85 ayant une forme géométrique courbe dont le centre de courbure est axialement à l'extérieur dudit plot de fermeture et cela afin d'améliorer l'écoulement de l'eau dans la rainure transversale radialement sous le plot d'appui 5, c'est-à-dire entre le fond de la rainure et le plot d'appui.

La figure 8 montre une vue en coupe selon la ligne VIII-VIII réalisée sur la figure 7. Sur cette figure 8, on voit que la rainure transversale 3 comprend de fait deux plots d'appui 5 et 8 qui participent ensemble à la limitation des déformations de la partie de bord lors du roulage du pneu pourvu de cette bande. En conséquence, il faut prendre en compte la surface active d'appui du dispositif de fermeture dans le calcul de l'aire totale de surface d'appui de la rainure. Sur cette même figure 8, on voit que la limite axialement externe de contact de la bande de roulement correspond au point repéré S (à l'état neuf, c'est-à-dire avant tout roulage). En outre, une petite rainure circonférentielle de découplage 2' est prévue axialement à l'extérieur de la bande.

La hauteur Hf du dispositif de fermeture 8 mesurée à partir du fond 30 de la rainure est ici égale à 90% de la profondeur moyenne P de la rainure. Enfin, il existe une distance minimale b entre la surface latérale 85 formant une sorte de toboggan avec le plot d'appui 5, cette distance étant au moins égale à 10% de la profondeur moyenne P de la rainure transversale 3 afin d'augmenter l'efficacité de l'écoulement de liquide radialement sous le plot d'appui 5.

En combinaison avec les variantes décrites, il est possible d'adjoindre dans la partie de la bande de roulement située entre les parties de bord des nervures pourvues avec des incisions semblables à celles décrites dans le brevet EP0787601-B1.

## Revendications

1. Pneu renforcé par une armature de carcasse et par une ceinture de renforcement radialement à l'extérieur de l'armature de carcasse, ce pneu comprenant une bande de roulement (1) ayant une surface de roulement destinée à venir en contact avec un sol pendant le roulage du pneu, cette bande de roulement comprenant des rainures d'orientation circonférentielle (2), ces rainures d'orientation circonférentielle délimitant des rangées d'éléments de sculpture comprenant deux rangées de bord délimitant axialement ladite bande, ces rangées de bord étant pourvues d'une pluralité de rainures transversales (3), chaque rainure transversale, de largeur au moins égale à 2 mm, ayant une profondeur et étant délimitée par des parois se faisant face, une pluralité des rainures transversales d'une rangée de bord comprend au moins un plot d'appui (5) faisant saillie sur au moins une paroi délimitant la rainure considérée, chaque plot d'appui (5) comprenant une surface active (50), c'est-à-dire une surface apte à venir en contact avec une autre surface pendant le passage dans le contact avec le sol, cette surface active étant à une longueur circonférentielle d'ouverture Ha de ladite autre surface, cette longueur circonférentielle d'ouverture Ha étant mesurée sur le pneu gonflé à sa pression d'usage, cette bande étant telle que :
- la somme des aires des surfaces actives (50) d'une rainure transversale (3) est au moins égale à 10% et au plus égale à 50% de l'aire de la surface de paroi sur laquelle sont formées ces surfaces actives,
- la longueur maximale LM dans la direction transversale d'une surface virtuelle convexe entourant l'ensemble des surfaces actives d'une rainure transversale et de plus petite longueur de contour est au moins deux fois plus grande que la hauteur maximale HM de cette même surface virtuelle convexe prise dans la direction de la profondeur de la rainure transversale,
- il existe au moins un passage pour un fluide entre chaque plot d'appui d'une rainure et le fond de ladite rainure, ce passage ayant au moins une hauteur radiale égale à 10% de la profondeur de la rainure,
- chaque rangée de bord a un taux de creux surfacique moyen Tc, ce taux de creux étant calculé en faisant le rapport entre la somme des longueurs circonférentielles d'ouverture Ha de toutes les surfaces actives des plots d'appui de la rangée de bord considérée, cela pour toutes les rainures comportant au moins un plot d'appui, et des longueurs circonférentielles Hi des incisions transversales, cette somme étant divisée par la longueur circonférentielle totale de la bande bord diminuée des longueurs circonférentielles des rainures dépourvues de plot, le taux de creux surfacique moyen Tc pour chaque rangée de bord est au moins égal à 0.7 et au plus égal à 1.6 fois E/R, E étant la moyenne calculée pour toutes les rainures comportant des surfaces actives de l'épaisseur mesurée entre un point de la surface active radialement le plus à l'extérieur et un point radialement le plus à l'extérieur de la ceinture de renforcement, R étant la moyenne calculée pour toutes les rainures transversales comportant des surfaces actives de la distance mesurée entre le point de la surface active radialement le plus à l'extérieur et l'axe de rotation du pneu pourvu de la bande de roulement, cette bande de roulement étant **caractérisée en ce qu'**au moins une rainure transversale comprenant au moins un plot d'appui est en outre pourvue avec un plot de fermeture (8) d'extrémité porté par au moins une paroi de la rainure transversale sur une hauteur, mesurée à partir du fond de la rainure, au moins égale à 80% de la profondeur moyenne de la rainure, ce plot de fermeture (8) étant formé au voisinage d'une rainure longitudinale dans laquelle débouche la rainure transversale de manière à fermer au moins en partie la rainure transversale et faciliter l'écoulement de liquide dans la rainure transversale.

2. Bande de roulement selon la revendication 1 **caractérisée en ce que** le plot de fermeture (8) comprend une surface d'appui active destinée à venir en contact avec une autre surface lors du roulage, l'aire de la surface d'appui du plot de fermeture étant au moins égale à 5% et au plus égale à 30% de l'aire de la surface de paroi sur laquelle est formé ce plot de fermeture.

3. Bande de roulement selon la revendication 1 ou la revendication 2 **caractérisée en ce que** le plot de fermeture a une surface axialement interne et une surface axialement externe, la surface interne faisant face à la rainure longitudinale et la surface externe étant orientée axialement vers l'extérieur de la bande, la surface externe du plot de fermeture a, vue en coupe radiale, une forme courbe dont le centre de courbure est axialement à l'extérieur dudit plot de fermeture.

4. Bande selon l'une des revendications 1 à 3 **caractérisée en ce que** la distance minimale b entre le plot de fermeture (8) et chacun des autres plots d'appui (5) de la rainure transversale est au moins égale à 10% de la profondeur (P) de la rainure transversale.

5. Bande de roulement selon l'une des revendications 1 à 4 **caractérisée en ce que** le taux de creux surfacique moyen Tc pour chaque rangée de bord est au moins égal à 0.8 et au plus égal à 1.5 fois E/R.

6. Bande de roulement selon l'une des revendications 1 à 5 **caractérisée en ce qu'**au moins un plot d'appui (5) comporte un profil interne de forme courbe et convexe, ce profil interne s'écartant progressivement du fond de la rainure en allant axialement vers l'extérieur pour favoriser l'écoulement de liquide.

7. Bande de roulement selon l'une des revendications 1 à 6 **caractérisée en ce que** au moins un plot d'appui (5) est formé de deux demi plots (54, 54') portés par les parois en vis-à-vis d'une rainure transversale (3).

8. Bande de roulement selon l'une des revendications 1 à 7 **caractérisée en ce que** la surface active d'une pluralité de plots d'appui a une géométrie comprenant des creux et des reliefs pour assurer un blocage au moins partiel et au moins selon une direction des mouvements relatifs d'une paroi de la rainure par rapport à la paroi de la rainure en vis-à-vis.

## Patentansprüche

1. Reifen, der durch eine Unterbaubewehrung und einen Verstärkungsgurt radial außerhalb der Unterbaubewehrung verstärkt ist, wobei dieser Reifen ein Laufband (1) mit einer Lauffläche umfasst, die dazu bestimmt ist, mit einem Boden während des Rollens des Reifens in Kontakt zu kommen, wobei dieses Laufband Umfangsorientierungsrillen (2) umfasst, wobei diese Umfangsorientierungsrillen Reihen von Skulpturelementen begrenzen, umfassend zwei Randreihen, die das Band axial begrenzen, wobei diese Randreihen mit einer Vielzahl von Querrillen (3) versehen sind, wobei jede Querrille mit einer Breite von mindestens gleich 2 mm eine Tiefe hat und von einander gegenüberliegenden Wänden begrenzt ist, wobei eine Vielzahl von Querrillen einer Randreihe mindestens ein Stützteil (5) umfasst, das auf mindestens einer Wand, die die betreffende Rille begrenzt, vorspringt, wobei jedes Stützteil (5) eine aktive Fläche (50) umfasst, d.h. eine Fläche, die geeignet ist, mit einer weiteren Fläche während der Kontaktaufnahme mit dem Boden in Kontakt zu kommen, wobei sich diese aktive Fläche auf einer Umfangsöffnungslänge Ha der anderen Fläche befindet, wobei diese Umfangsöffnungslänge Ha an dem aufgepumpten Reifen bei seinem Verwendungsdruck gemessen wird, wobei dieses Band derart vorgesehen ist, dass:
- die Summe der Bereiche der aktiven Flächen (50) einer Querrille (3) mindestens gleich 10 % und höchstens gleich 50 % des Bereichs der Wandfläche ist, an der diese aktiven Flächen ausgebildet sind,
- die maximale Länge LM in Querrichtung einer virtuellen konvexen Fläche, die die Gesamtheit der aktiven Flächen einer Querrille umgibt und von geringerer Konturenlänge ist, mindestens zweimal größer als die maximale Höhe HM dieser selben virtuellen konvexen Fläche in Richtung der Tiefe der Querrille ist,
- mindestens ein Fluiddurchgang zwischen jedem Stützteil einer Rille und dem Boden der Rille besteht, wobei dieser Durchgang mindestens eine radiale Höhe gleich 10 % der Tiefe der Rille hat,
- jede Randreihe ein durchschnittliches Flächenmuldenverhältnis Tc hat, wobei dieses Muldenverhältnis berechnet wird, indem das Verhältnis zwischen der Summe der Umfangsöffnungslängen Ha aller aktiven Flächen der Stützteile der betreffenden Randreihe, und zwar für alle Rillen, die mindestens ein Stützteil umfassen, und den Umfangslängen Hi der Querneigungen hergestellt wird, wobei diese Summe durch die Gesamtumfangslänge des Randbandes, verringert um die Umfangslängen der Rillen ohne Stützteile, dividiert wird, wobei das durchschnittliche Flächenmuldenverhältnis Tc für jede Randreihe mindestens gleich 0,7- und höchstens gleich 1,6-mal E/R ist, wobei E der berechnete Durchschnitt für alle Rillen, umfassend aktive Flächen der Dicke, gemessen zwischen einem Punkt der radial am weitesten außen befindlichen aktiven Fläche und einem radial am weitesten außen befindlichen Punkt des Verstärkungsgurts, ist, wobei R der berechnete Durchschnitt für alle Querrillen, umfassend aktive Flächen mit dem Abstand, gemessen zwischen dem Punkt der radial am weitesten außen befindlichen aktiven Fläche und der Rotationsachse des Reifens, versehen mit dem Laufband, ist, wobei dieses Laufband **dadurch gekennzeichnet ist, dass** mindestens eine Querrille, umfassend mindestens ein Stützteil, ferner mit einem Verschlussendteil (8) versehen ist, das von mindestens einer Wand der Querrille auf einer Höhe, gemessen vom Boden der Rille, mindestens gleich 80 % der durchschnittlichen Tiefe der Rille getragen wird, wobei dieses Verschlussteil (8) in der Nähe einer Längsrille ausgebildet ist, in die die Querrille mündet, um zumindest teilweise die Querrille zu verschließen und das Ablaufen von Flüssigkeit in der Querrille zu erleichtern.

2. Laufband nach Anspruch 1, **dadurch gekennzeichnet, dass** das Verschlussteil (8) eine aktive Stützfläche umfasst, die dazu bestimmt ist, mit einer weiteren Fläche während des Laufens in Kontakt zu kommen, wobei der Bereich der Stützfläche des Verschlussteils mindestens gleich 5 % und höchstens gleich 30 % des Bereichs der Wandfläche, an der dieses Verschlussteil ausgebildet ist, darstellt.

3. Laufband nach Anspruch 1 oder Anspruch 2, **dadurch gekennzeichnet, dass** das Verschlussteil eine axial innere Fläche und eine axial äußere Fläche aufweist, wobei die innere Fläche der Längsrille gegenüberliegt und die äußere Fläche axial zum Äußeren des Bandes ausgerichtet ist, wobei die äußere Fläche des Verschlussteils im Radialschnitt gesehen eine gekrümmte Form hat, deren Krümmungsmittelpunkt axial außerhalb des Verschlussteils liegt.

4. Band nach einem der Ansprüche 1 bis 3, **dadurch gekennzeichnet, dass** der Mindestabstand b zwischen dem Verschlussteil (8) und jedem der anderen Stützteile (5) der Querrille mindestens gleich 10 % der Tiefe (P) der Querrille ist.

5. Laufband nach einem der Ansprüche 1 bis 4, **dadurch gekennzeichnet, dass** das durchschnittliche Flächenmuldenverhältnis Tc für jede Randreihe mindestens gleich 0,8- und höchstens gleich 1,5-mal E/R ist.

6. Laufband nach einem der Ansprüche 1 bis 5, **dadurch gekennzeichnet, dass** mindestens ein Stützteil (5) ein inneres Profil von gekrümmter oder konvexer Form umfasst, wobei sich dieses innere Profil nach und nach vom Boden der Rille axial nach außen entfernt, um das Ablaufen von Flüssigkeit zu begünstigen.

7. Laufband nach einem der Ansprüche 1 bis 6, **dadurch gekennzeichnet, dass** mindestens ein Stützteil (5) aus zwei halben Teilen (54, 54') gebildet ist, die von den gegenüberliegenden Wänden einer Querrille (3) getragen werden.

8. Laufband nach einem der Ansprüche 1 bis 7, **dadurch gekennzeichnet, dass** die aktive Fläche einer Vielzahl von Stützteilen eine Geometrie mit Mulden und Reliefs hat, um eine zumindest teilweise und zumindest in eine Richtung der relativen Bewegungen einer Wand der Rille in Bezug zur Wand der gegenüberliegenden Rille gerichtete Feststellung zu gewährleisten.

## Claims

1. Tyre reinforced with a carcass reinforcement and with a reinforcing belt radially outside the carcass reinforcement, this tyre comprising a tread (1) having a rolling surface designed to come into contact with a ground surface during the running of the tyre, this tread comprising grooves (2) of circumferential orientation, these grooves of circumferential orientation delimiting rows of sculpture elements comprising two edge rows axially delimiting the said tread, these edge rows being provided with a plurality of transverse grooves (3), each transverse groove, with a width at least equal to 2 mm, having a depth and being delimited by walls facing one another, a plurality of the transverse grooves of one edge row comprises at least one bearing block (5) protruding on at least one wall delimiting the groove in question, each bearing block (5) comprising an active surface (50), that is to say a surface capable of coming into contact with another surface during the passage in contact with the ground surface, this active surface being at a circumferential length of opening Ha from the said other surface, this circumferential length of opening Ha being measured on the tyre inflated to its pressure of use, this tread being such that:
- the total of the areas of the active surfaces (50) of a transverse groove (3) is at least equal to 10% and at most equal to 50% of the area of the wall surface on which these active surfaces are formed,
- the maximum length LM in the transverse direction of a virtual convex surface surrounding all of the active surfaces of a transverse groove and of shorter contour length is at least twice as great as the maximum height HM of this same virtual convex surface taken in the direction of the depth of the transverse groove,
- there is at least one passageway for a fluid between each bearing block of a groove and the bottom of the said groove, this passageway having at least a radial height equal to 10% of the depth of the groove,
- each edge row has a mean surface indentation ratio Tc, this indentation ratio being calculated by taking the ratio between the total of the circumferential lengths of opening Ha of all the active surfaces of the bearing blocks of the edge row in question, for all the grooves comprising at least one bearing block, and of the circumferential lengths Hi of the transverse incisions, this total being divided by the total circumferential length of the edge tread minus the circumferential lengths of the grooves with no blocks, the mean surface indentation ratio Tc for each edge row is at least equal to 0.7 and at most equal to 1.6 times E/R, E being the mean calculated for all the grooves comprising active surfaces of the thickness measured between a point of the active surface that is radially outermost and a radially outermost point of the reinforcing belt, R being the mean calculated for all the transverse grooves comprising active surfaces of the distance measured between the point of the active surface that is radially outermost and the rotation axis of the tyre provided with the tread,
this tread being **characterized in that** at least one transverse groove comprising at least one bearing block is also provided with an end closing block (8) supported by at least one wall of the transverse groove over a height, measured from the bottom of the groove, that is at least equal to 80% of the mean depth of the groove, this closing block (8) being formed in the vicinity of a longitudinal groove into which the transverse groove emerges so as to close at least in part the transverse groove and make the flow of liquid in the transverse groove easier.

2. Tread according to Claim 1, **characterized in that** the closing block (8) comprises an active bearing surface designed to come into contact with another surface when running, the area of the bearing surface of the closing block being at least equal to 5% and at most equal to 30% of the area of the wall surface on which this closing block is formed.

3. Tread according to Claim 1 or Claim 2, **characterized in that** the closing block has an axially inner surface and an axially outer surface, the inner surface facing the longitudinal groove and the outer surface being oriented axially towards the outside of the tread, the outer surface of the closing block has, seen in radial section, a curved shape of which the centre of curvature is axially outside the said closing block.

4. Tread according to one of Claims 1 to 3, **characterized in that** the minimum distance b between the closing block (8) and each of the other bearing blocks (5) of the transverse groove is at least equal to 10% of the depth (P) of the transverse groove.

5. Tread according to one of Claims 1 to 4 **characterized in that** the mean surface indentation ratio Tc for each edge row is at least equal to 0.8 and at most equal to 1.5 times E/R.

6. Tread according to one of Claims 1 to 5, **characterized in that** at least one bearing block (5) comprises an inner profile with a curved and convex shape, this inner profile moving away progressively from the bottom of the groove and going axially outwards in order to promote the flow of liquid.

7. Tread according to one of Claims 1 to 6, **characterized in that** at least one bearing block (5) is formed of two half-blocks (54, 54') supported by the facing walls of a transverse groove (3).

8. Tread according to one of Claims 1 to 7, **characterized in that** the active surface of a plurality of bearing blocks has a geometry comprising indentations and raised elements in order to immobilize at least partially and at least in one direction the relative movements of a wall of the groove relative to the facing wall of the groove.
